(19) Europäisches Patentamt / European Patent Office / Office européen des brevets

(11) **EP 3 474 031 A1**

(12) **DEMANDE DE BREVET EUROPEEN**

(43) Date de publication:
**24.04.2019 Bulletin 2019/17**

(51) Int Cl.:
**G01S 5/10** *(2006.01)*    **H04W 64/00** *(2009.01)*

(21) Numéro de dépôt: **18201076.9**

(22) Date de dépôt: **17.10.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **19.10.2017 FR 1701089**

(71) Demandeur: **Thales**
**92400 Courbevoie (FR)**

(72) Inventeur: **HEURGUIER, Dominique**
**92622 GENNEVILLIERS CEDEX (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(54) **PROCEDE DE GEOLOCALISATION ET SON DISPOSITIF**

(57)     L'invention concerne un procédé de géolocalisation d'au moins un terminal radio $R_1$ en utilisant un réseau d'opportunité radio cellulaire sans connaissance de sa synchronisation comprenant plusieurs balises et au moins un second terminal radio collaboratif, caractérisé en ce qu'il comporte au moins les étapes suivantes :
utiliser au moins cinq stations ou balises de positions connues et au moins lesdits deux terminaux radios $R_1$, $R_2$, de positions inconnues,
calculer les différences de temps d'arrivée pour au moins quatre couples composés à partir desdites cinq balises, pour le premier terminal radio $R_1$ et pour le deuxième terminal radio $R_2$ (501),
à partir de ces valeurs de différences de temps d'arrivée, collecter les mesures de $R_1$ et $R_2$ afin de calculer les différences de différence de temps d'arrivée entre les récepteurs et déterminer les coordonnées d'au moins le premier terminal radio $R_1$ (502).

FIG.5

**EP 3 474 031 A1**

**Description**

L'invention concerne un procédé de géolocalisation utilisant un réseau d'opportunité radio reposant au moins en partie sur une infrastructure comprenant au moins cinq balises fixes de positions connues et au moins deux terminaux radios mobiles dont les positions ne sont pas connues. Elle concerne aussi un dispositif associé au procédé.

L'invention s'applique pour des réseaux asynchrones sans récepteur de référence préalablement géoréférencé.

L'expression « réseau d'opportunité radio » désigne tout réseau existant dont on connaît les positions de balises fixes, tels que des réseaux radiocellulaires 2G, 3G ou 4G ou des réseaux de radiodiffusion, par exemple les réseaux d'émetteurs pour la télévision numérique terrestre TNT.

Le problème technique concerne la géolocalisation en deux dimensions de récepteurs exploitant des signaux d'opportunités.

Il existe à l'heure actuelle différentes techniques de géolocalisation exploitant des signaux d'opportunités selon que ces réseaux sont synchrones ou asynchrones.

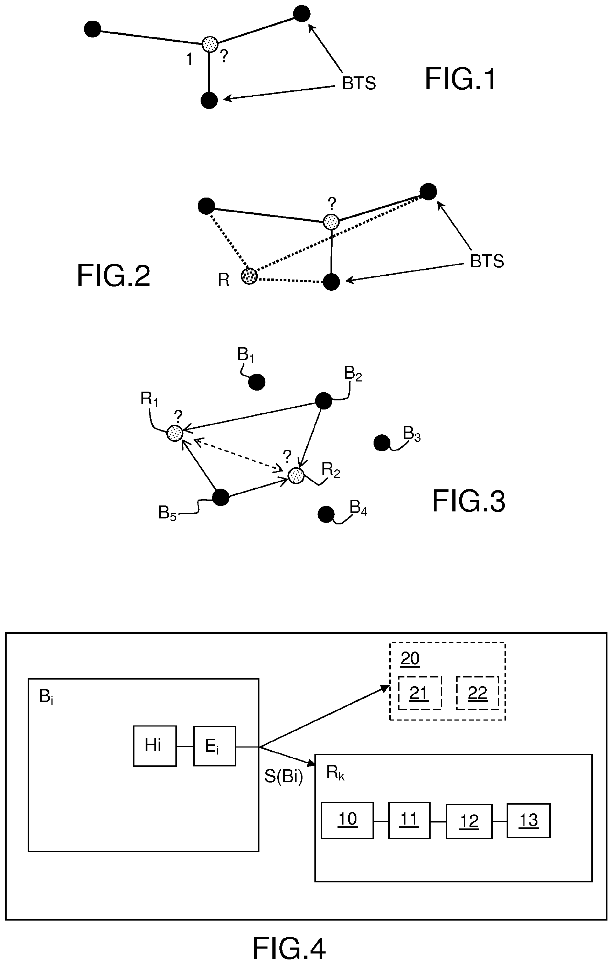

Dans le cas d'un réseau synchrone, les techniques utilisent des balises BTS (Base Transceiver Station), figure 1, de positions absolues, connues, et synchrones entre elles. Les balises émettent de manière synchrone des séquences de référence, au sein de canaux de synchronisation, et la géolocalisation d'une station 1 se fait en considérant des mesures de retard différentiel de réception TDOA (Time Différence of Arrivai) de ces séquences de référence en provenance d'au moins trois balises, puis en effectuant une localisation par multilatération, bien connue des gens du métier.

Pour des réseaux asynchrones, les balises sont de positions connues, mais elles ne sont pas synchronisées. Chaque balise émet périodiquement des émissions de séquence de référence qui ne sont pas synchronisées entre elles. C'est notamment le cas des réseaux cellulaires 2G/3G/4G européens. Une solution pour des réseaux asynchrones, consiste à employer un récepteur de référence R de position connue, figure 2. Ce récepteur R mesure la désynchronisation ou différence du temps d'émission entre plusieurs balises, en utilisant les mesures de différence de temps d'arrivéz TDOA des séquences émises par ces balises (la connaissance des distances aux balises permettant de déterminer les décalages de leurs émissions). A partir des valeurs de décalage mesurées, il est alors possible de géolocaliser un récepteur par mesure de différence de temps d'arrivée TDOA des séquences émises par au moins trois balises dont on a pu estimer les décalages avec le récepteur de référence. Pour obtenir des mesures fiables, il est nécessaire que le récepteur R soit parfaitement localisé.

Les solutions existantes présentent de nombreux avantages. Toutefois elles sont associées aux contraintes suivantes :

- L'utilisation d'un récepteur de référence,
- L'obligation de géoréférencer le récepteur de référence ; ce qui, dans certaines situations, par exemple en l'absence de couverture GNSS, ou en l'absence d'amer, n'est pas toujours possible.

L'invention concerne un procédé de géolocalisation d'au moins un terminal radio $R_1$ en utilisant un réseau d'opportunité radio cellulaire sans connaissance de la synchronisation comprenant plusieurs balises et au moins un second terminal radio collaboratif, caractérisé en ce qu'il comporte au moins les étapes suivantes :

- utiliser au moins cinq stations ou balises de positions connues et au moins lesdits deux terminaux radios $R_1$, $R_2$, de positions inconnues,
- calculer les différences de temps d'arrivée pour au moins quatre couples de balises composés à partir desdites cinq balises, pour le premier terminal radio $R_1$ et pour le deuxième terminal radio $R_2$ sur réception d'un signal contenant une séquence discriminante $S_q$ commune aux balises,
- à partir de ces quatre valeurs de différences de temps d'arrivée, collecter les mesures de $R_1$ et $R_2$, calculer les différences de différence de temps d'arrivée entre les récepteurs pour lesdits quatre couples de balise et déterminer les coordonnées d'au moins le premier terminal radio $R_1$.

Le procédé peut comporter une étape supplémentaire permettant de déterminer les valeurs des retards $dt_{ij}$ à l'émission des signaux contenant la séquence discriminante $S_q$ correspondant aux décalages de synchronisation entre au moins deux balises Bi et Bj. Les retards $dt_{ij}$ à l'émission des signaux contenant la séquence $S_q$ sont utilisés par le procédé pour déterminer directement la position des terminaux à partir des mesures de retards TDOA.

Le procédé peut aussi utiliser un nombre de balises de positions connues supérieur à cinq, un nombre de couples de balises supérieur à quatre et un nombre de terminaux radios de positions inconnues supérieur à deux, et comporter un traitement statistique des mesures de différence de temps d'arrivée déterminées par chaque couple de balises tel qu'un estimateur du maximum de vraisemblance, bien connu des gens du métier.

Selon une variante de réalisation, le procédé détecte une dérive dans le temps d'une horloge locale d'une station balise et il réactualise les valeurs de retards $dt_{ij}$ si la valeur de dérive est supérieure à une valeur seuil de dérive $V_d$.

Le procédé peut comporter au moins les étapes suivantes :
calculer sur au moins cinq balises de positions connues des mesures de différence de temps d'arrivée TDOA entre au moins quatre couples de balises pour le terminal

radio $R_1$ dont on cherche la position et pour un deuxième terminal radio $R_2$ :

$$TDOA(Rk, Bi, Bj) = dt_{ij} + \frac{(B_iR_k - B_jR_k)}{c}$$

Calculer pour lesdits quatre couples de balises les différences de TDOA entre les deux récepteurs : DTDOA(Bi, Bj)= TDOA($R_2$, Bi, Bj)- TDOA($R_1$, Bi, Bj) :

$$DTDOA_1 = \frac{(B_2R_2 - B_1R_2 - B_2R_1 + B_1R_1)}{c}$$

$$DTDOA_2 = \frac{(B_3R_2 - B_1R_2 - B_3R_1 + B_1R_1)}{c}$$

$$DTDOA_3 = \frac{(B_4R_2 - B_1R_2 - B_4R_1 + B_1R_1)}{c}$$

$$DTDOA_4 = \frac{(B_5R_2 - B_1R_2 - B_5R_1 + B_1R_1)}{c}$$

à partir de ces mesures de différence DTDOA et sachant que la distance s'exprime par

$$\sqrt{(x_B - x_1)^2 + (y_B - y)^2},$$ déduire au moins

les coordonnées $(x_1, y_1)$ et donc la position du terminal radio $R_1$.

Le procédé permet de déterminer la position de terminaux dans un réseau non synchronisé tel qu'un réseau radio cellulaire européen.

L'invention concerne aussi un dispositif pour déterminer la position d'au moins un premier terminal radio $R_1$ en deux dimensions utilisant un réseau d'opportunité radio cellulaire sans connaissance de la synchronisation et comprenant plusieurs balises communiquant avec des terminaux radios au moyen d'un protocole de communication caractérisé en ce qu'au moins un terminal radio Rk est équipé d'au moins :

    un premier module de réception configuré pour détecter une séquence discriminante $S_q$ émise par une balise et dater sa réception TOAi,
    un deuxième module adapté à calculer les différences de temps d'arrivée TDOAi,j=(TOAi - TOAj) et un module adapté à diffuser les calculs de TDOAi,j vers les autres terminaux radios, et
    un processeur configuré pour déterminer les différences de différence de temps d'arrivée DTDOA, puis les coordonnées pour au moins le premier terminal radio $R_1$ à partir des calculs locaux (effectués au niveau d'un récepteur) de différence de temps d'arrivée TDOAi,j et des calculs de TDOAi,j effectués et diffusés par au moins un second récepteur $R_2$.

Le dispositif selon l'invention pour déterminer la position d'au moins un terminal radio $R_1$ en deux dimensions utilisant un réseau d'opportunité radio cellulaire sans connaissance de la synchronisation comprend plusieurs balises communiquant avec des terminaux radios au moyen d'un protocole de communication. Le dispositif peut comporter un dispositif central comprenant un dispositif recevant les mesures de différence de temps d'arrivée d'au moins quatre couples issus d'au moins cinq balises, pour le premier terminal radio $R_1$ et pour le deuxième terminal radio $R_2$ sur réception d'un signal contenant une séquence discriminante $S_q$ commune aux balises et un processeur adapté à calculer les coordonnées pour au moins le premier terminal radio $R_1$.

Le dispositif peut comporter un dispositif de mesure de dérive d'horloge locale équipant chaque station balise.

D'autres caractéristiques et avantages de la présente invention apparaîtront mieux à la lecture de la description d'exemples de réalisation donnés à titre illustratif et non limitatif, annexée des figures qui représentent :

- La figure 1, une illustration du principe de géolocalisation,
- La figure 2, une solution de géolocalisation de l'art antérieur,
- La figure 3, le principe mis en oeuvre par l'invention,
- La figure 4, un détail des modules contenus dans une balise ou un terminal radio de position inconnue, et
- La figure 5, un organigramme listant les étapes du procédé selon l'invention.

De façon à mieux faire comprendre l'invention, la description qui suit est donnée dans le cadre d'un réseau de communication comprenant au moins cinq balises dont la position est connue et au moins deux terminaux radios $R_1$, $R_2$ de positions inconnues configurés pour échanger des informations (par exemple, par l'intermédiaire du réseau d'opportunité s'il s'agit d'un réseau radiocellulaire public).

La figure 3 illustre le principe mis en oeuvre par le procédé de géolocalisation sans connaissance de la synchronisation. Dans l'exemple donné à titre illustratif et nullement limitatif, cinq balises $B_i$ avec i=1 à 5, et un deuxième terminal radio $R_2$ (non géolocalisé) sont utilisés pour géolocaliser un premier terminal radio $R_1$. Les échanges des données ou d'informations se font par l'intermédiaire de canaux de communication dédiés ou bien établis avec les balises, dans le cas où le réseau d'opportunité est un réseau radiocellulaire public. Le procédé s'appuie sur des calculs de différences de mesures de différence de temps TDOA pour éliminer le paramètre de désynchronisation et déterminer la position du termi-

nal radio $R_1$ définie dans un plan (x, y) par exemple. Ces mesures de différence de TDOA sont dénommées DTDOA dans la suite de ce document.

Pour géolocaliser le terminal radio $R_1$, le système utilise un second récepteur $R_2$ et au moins cinq balises $B_i= B_1$, $B_2$, $B_3$, $B_4$, $B_5$. Chaque balise a une position connue par les terminaux radios, ceci lors de la configuration du système ou en cours de fonctionnement par des techniques connues de l'homme du métier. Une balise comprend une horloge locale $H_i$ de grande précision. Chaque balise $B_i$ est pourvue d'un émetteur $E_i$ adapté à émettre, par exemple en continu, un signal de synchronisation contenant périodiquement une séquence discriminante $S_q$, permettant à tout terminal radio $R_k$ de s'accrocher respectivement sur les signaux $S(B_1)$, $S(B_2)$, $S(B_3)$, $S(B_4)$, $S(B_5)$ émis respectivement par les balises $B_1$, $B_2$, $B_3$, $B_4$, $B_5$. La séquence discriminante $S_q$ est par nature identique pour l'ensemble des balises et permet l'accrochage des terminaux.

Le système considère au moins deux terminaux radios $R_1$, $R_2$, de positions inconnues $P_1(x_1, y_1)$, $P_2 (x_2, y_2)$, dans un espace à deux dimensions. Chaque terminal radio $R_k= R_1$, $R_2$ comprend un premier module de réception 10 configuré pour détecter une séquence discriminante Sq émise par une balise et dater sa réception TOAi, un deuxième module 11 adapté à calculer les TDOAi, j=(TOAi - TOAj) et un module 12, $E_k(R_k)$ adapté à diffuser les mesures de TDOAi,j vers les autres terminaux radios intervenant dans le système ou vers un centre de traitement centralisé. Les différentes mesures et les calculs sont traités par un processeur 13 adapté à exécuter les étapes et les calculs du procédé selon l'invention afin de déterminer les différences de différence de temps d'arrivée DTDOA et au moins la position du premier terminal radio $R_1$. Dans un second temps, le procédé pourra aussi déterminer la position du deuxième terminal radio $R_2$. Le module 12 est configuré pour diffuser le retard différentiel mesuré sur chaque canal de communication $CH_{ij}$ pour chaque couple de balises $(B_i, B_j)$. La diffusion des mesures se fait par des techniques classiques et vers chacun des autres terminaux radios dans le cas d'un système décentralisé ou vers un centre de traitement dans le cas d'un système centralisé.

Le système observable selon l'invention comprend au moins cinq balises et au moins deux terminaux radios recevant les signaux de synchronisation émis par les cinq balises et contenant la séquence discriminante. Le mot observable signifie, dans le contexte de l'invention, que l'on peut connaître la position des terminaux radios à partir des mesures de retard différentiel sur les balises en transmettant entre terminaux radios les mesures effectuées.

Dans le cas d'un système décentralisé, les mesures de différences de différence de temps d'arrivée DTDOA des séquences sont effectuées sur chaque système de réception à des positions différentes.

Dans le cas d'un système centralisé, le système comprendra un dispositif central 20 représenté en pointillés sur la figure 4. Ce dispositif central comprend un récepteur 21 sur lequel arrivent toutes les mesures TDOA effectuées au niveau des terminaux radios et un module de traitement 22 adapté à exécuter les étapes du procédé pour géolocaliser au moins le premier terminal radio.

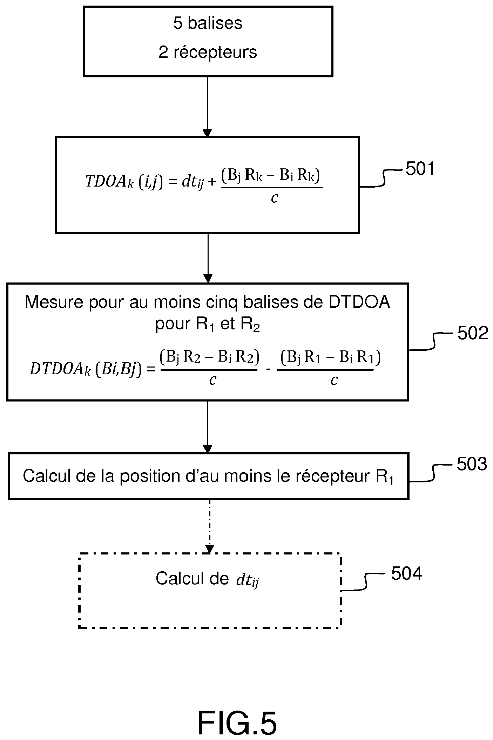

Le procédé dans l'exemple donné effectue plusieurs mesures de différence de différence de temps d'arrivée DTDOA pour au moins cinq balises de positions connues, donc au moins quatre couples de balises. Le procédé va comporter au moins les étapes suivantes, illustrées à la figure 5 : Soient $B_i$ et $B_j$ deux balises d'écart de synchro $dt_{ij}$,

Soient $R_1$ un premier terminal radio à localiser et $R_2$ un second terminal radio, les positions en deux dimensions de ces deux terminaux radios sont inconnues $P_1(x_1, y_1)$, $P_2(x_2, y_2)$,

De manière générique, on désigne par k l'indice pour un terminal radio, par i l'indice pour une première balise et par j l'indice pour une deuxième balise, lorsque l'on considère un couple de balises.

La mesure de différence de temps d'arrivée TDOA sur le terminal radio $R_k$ par rapport aux signaux des balises $B_i$ et $B_j$ s'écrit, 501,

$$TDOA_k(i,j) = dt_{ij} + \frac{(B_jR_k - B_iR_k)}{c}$$

avec c la vitesse de la lumière, $dt_{ij}$ l'écart de synchronisation entre les deux balises ou écart à l'émission, $(B_jR_k - B_iR_k)$ la différence de temps de marche entre les deux balises,

502, Le procédé au niveau du processeur du terminal radio va calculer sur au moins quatre couples de balises composés à partir de cinq balises de positions connues une mesure de différence de temps d'arrivée TDOA pour le premier terminal radio $R_1$ dont on cherche la position et pour un deuxième terminal radio $R_2$ ; Le processeur 13 dans le cas d'un traitement décentralisé ou le module de traitement 22 dans le cas d'un traitement centralisé, calcule pour lesdits couples de balises les différences de TDOA entre les deux récepteurs : DTDOA(Bi, Bj)= TDOA($R_2$, Bi, Bj)- TDOA($R_1$, Bi, Bj) :

La différence de différence de temps d'arrivée DTDOA entre les mesures de différence de temps d'arrivée TDOA sur le deuxième terminal radio $R_2$ et pour le premier terminal radio $R_1$ s'écrit :

Pour les Balises $B_1$ et $B_2$: la différence $DTDOA_1$ est égale à

$$\frac{(B_2R_2 - B_1R_2 - B_2R_1 + B_1R_1)}{c}$$

Pour les Balises $B_1$ et $B_3$, la différence $DTDOA_2$ est égale à

$$\frac{(B_3 R_2 - B_1 R_2 - B_3 R_1 + B_1 R_1)}{c}$$

Pour les Balises $B_1$ et $B_4$ la différence $DTDOA_3$ est égale à

$$\frac{(B_4 R_2 - B_1 R_2 - B_4 R_1 + B_1 R_1)}{c}$$

Pour les Balises $B_1$ et $B_5$ la différence $DTDOA_4$ est égale à

$$\frac{(B_5 R_2 - B_1 R_2 - B_5 R_1 + B_1 R_1)}{c}$$

503, A partir de ces mesures de différence DTDOA pour les quatre couples de mesure et sachant que la distance s'exprime par $\sqrt{(x_B - x_1)^2 + (y_B - y)^2}$ le procédé déduit de ce système de quatre équations à quatre inconnues, les coordonnées $(x_1, y_1)$ et donc la position du terminal radio $R_1$. Il peut aussi déduire la position $(x_2, y_2)$ du terminal radio $R_2$.

Le calcul précédent donné à titre d'exemple utilise quatre couples de balise $(B_1$ et $B_2)$, $(B_1$ et $B_3)$, $(B_1$ et $B_4)$, $(B_1$ et $B_5)$. Sans sortir du cadre de l'invention, il est possible d'imaginer d'autres combinaisons pour les couples retenus.

A partir des valeurs de positions obtenues, au moins de la position du terminal radio $R_1$, il est également possible, 504, de déterminer les valeurs des retards $dt_{ij}$ correspondant aux décalages de synchronisation entre les deux balises Bi et Bj. Pour chaque couple de balises $(i,j)$ il est alors possible, à partir des positions $(x_1, y_1)$ et $(x_2, y_2)$ des deux terminaux radios $R_1$, $R_2$, de reconstituer l'écart de synchronisation à l'émission des signaux contenant la séquence discriminante :

$$TDOA_k(i,j) = dt_{ij} + \frac{(B_j R_k - B_i R_k)}{c}.$$

Ceci sous-entend que l'horloge des balises est fiable et que sa dérive dans le temps est faible.

A partir de ces valeurs de retard, il est ensuite possible au procédé d'exécuter des étapes de mesures de TDOA selon le procédé classique connu de l'homme du métier exposé préalablement dans l'art antérieur pour déterminer la position de terminaux.

Il est aussi possible de surveiller une éventuelle dérive dans le temps de l'horloge d'une balise en réestimant périodiquement les valeurs des retards $dt_{ij}$ correspondant aux décalages de synchronisation entre les balises. Dans le cas où la dérive devient trop importante (supérieure à une valeur seuil de dérive $V_d$ définie, par exemple, en fonction des performances recherchées pour le système) et susceptible de conduire à des erreurs de mesure, alors le système peut décider de mettre à jour les valeurs de décalages de synchronisation entre les balises. Une fois cette mise à jour effectuée, le procédé habituel de recherche de position d'une station peut être exécuté. La période avec laquelle on va réestimer la position dépend de l'application et de la précision recherchée.

Selon une autre variante de réalisation, le procédé comportera l'utilisation d'un nombre de couples de balises supérieur à quatre et/ou un nombre de balises supérieur à cinq et/ou un nombre de terminaux radios supérieur à deux, afin d'introduire de la redondance (obtention d'un nombre de mesures plus important) dans les mesures de temps d'arrivée, de différences de temps d'arrivée et appliquer des traitements statistiques pour minimiser les erreurs éventuelles de mesure.

Le procédé selon l'invention est utilisé pour déterminer la position de terminaux dans un réseau non synchronisé tel qu'un réseau radio cellulaire européen.

L'invention permet des géolocalisations d'opportunité sur des réseaux asynchrones sans avoir recours à des terminaux radios préalablement géoréférencés.

**Revendications**

1. Procédé de géolocalisation d'au moins un terminal radio $R_1$ en utilisant un réseau d'opportunité radio sans connaissance de sa synchronisation comprenant plusieurs balises et au moins un second terminal radio collaboratif, **caractérisé en ce qu'**il comporte au moins les étapes suivantes :

   • utiliser au moins cinq stations ou balises de positions connues et au moins lesdits deux terminaux radios $R_1$, $R_2$, de positions inconnues, (501),
   • calculer les différences de temps d'arrivée pour au moins quatre couples composés à partir desdites cinq balises, pour le premier terminal radio $R_1$ et pour le deuxième terminal radio $R_2$ sur réception d'un signal contenant une séquence discriminante $S_q$ commune aux balises,
   • à partir de ces valeurs de différences de temps d'arrivée, collecter les mesures de $R_1$ et $R_2$ afin de calculer les différences de différence de temps d'arrivée entre les récepteurs pour au moins lesdits quatre couples de balises et déterminer les coordonnées d'au moins le premier terminal radio $R_1$.

2. Procédé selon la revendication 1 **caractérisé en ce qu'**il comporte une étape permettant de déterminer les valeurs des retards $dt_{ij}$ à l'émission des signaux contenant la séquence discriminante $S_q$ correspondant aux décalages de synchronisation entre au moins deux balises Bi et Bj.

3. Procédé selon la revendication 2 **caractérisé en ce qu'**il utilise les valeurs des retards $dt_{ij}$ à l'émission des signaux contenant la séquence discriminante $S_q$ pour déterminer la position des terminaux radios ou des balises à partir de ces valeurs de retards.

4. Procédé selon l'une des revendications 1 à 3 **caractérisé en ce qu'**il utilise un nombre de balises de positions connues supérieur à cinq et/ou un nombre de couples de balises supérieur à quatre et/ou un nombre de terminaux radios de positions inconnues supérieur à deux, et **en ce qu'**il comporte un traitement statistique des mesures de différence de temps d'arrivée déterminées par chaque couple de balises.

5. Procédé selon l'une des revendications 1 à 4 **caractérisé en ce qu'**il détecte une dérive dans le temps d'une horloge locale d'une station balise et **en ce qu'**il réactualise les valeurs de retards $dt_{ij}$ si la valeur de dérive est supérieure à une valeur seuil de dérive $V_d$.

6. Procédé selon la revendication 1 **caractérisé en ce qu'**il comporter au moins les étapes suivantes :

   calculer sur au moins cinq balises de positions connues une mesure de différence de temps d'arrivée TDOA entre au moins quatre couples de balises pour le terminal radio $R_1$ dont on cherche la position et pour un deuxième terminal radio $R_2$.
   Calculer pour lesdits couples de balises les différences de TDOA entre les deux récepteurs :
   DTDOA(Bi, Bj)= TDOA($R_2$, Bi, Bj)- TDOA($R_1$, Bi, Bj) :

$$DTDOA_1 = \frac{(B_2 R_2 - B_1 R_2 - B_2 R_1 + B_1 R_1)}{c}$$

$$DTDOA_2 = \frac{(B_3 R_2 - B_1 R_2 - B_3 R_1 + B_1 R_1)}{c}$$

$$DTDOA_3 = \frac{(B_4 R_2 - B_1 R_2 - B_4 R_1 + B_1 R_1)}{c}$$

$$DTDOA_4 = \frac{(B_5 R_2 - B_1 R_2 - B_5 R_1 + B_1 R_1)}{c}$$

   à partir de ces mesures de différences DTDOA et sachant que la distance s'exprime par

$$\sqrt{(x_B - x_1)^2 + (y_B - y)^2}$$ déduire au moins les coordonnées ($x_1$, $y_1$) et donc la position du terminal radio $R_1$.

7. Dispositif pour déterminer la position d'au moins un premier terminal radio $R_1$ en deux dimensions utilisant un réseau d'opportunité radio cellulaire sans connaissance de la synchronisation et comprenant plusieurs balises communiquant avec des terminaux radios au moyen d'un protocole de communication **caractérisé en ce qu'**au moins un terminal radio $R_k$ est équipé d'au moins:

   un premier module de réception (10) configuré pour détecter une séquence discriminante $S_q$ émise par une balise et dater sa réception TOAi, un deuxième module (11) adapté à calculer les différences de temps d'arrivée TDOAi,j=(TOAi - TOAj) et un module (12) adapté à diffuser les calculs de TDOAi,j vers les autres terminaux radios, et
   un processeur (13) adapté pour déterminer les différences de différence de temps d'arrivée DTDOA, puis les coordonnées pour au moins le premier terminal radio $R_1$ à partir de calculs de différences TDOAi,j et des calculs de TDOAi,j effectués et diffusés par au moins un second récepteur $R_2$.

8. Dispositif pour déterminer la position d'au moins un terminal radio $R_1$ en deux dimensions utilisant un réseau d'opportunité radio cellulaire sans connaissance de la synchronisation et comprenant plusieurs balises communiquant avec des terminaux radios au moyen d'un protocole de communication **caractérisé en ce qu'**il comporte un dispositif central (20) comprenant un dispositif recevant les mesures de différence de temps d'arrivée d'au moins cinq balises et pour au moins quatre couples de balises, pour le premier terminal radio $R_1$ et pour le deuxième terminal radio $R_2$ sur réception d'un signal contenant une séquence discriminante $S_q$ commune aux balises et un processeur adapté à calculer les coordonnées pour au moins le premier terminal radio $R_1$.

9. Dispositif selon l'une des revendications 7 ou 8 **caractérisé en ce qu'**il comporte un dispositif de mesure de dérive d'horloge locale équipant chaque station balise.

FIG.1

FIG.2

FIG.3

FIG.4

$$TDOA_k \, (i,j) = dt_{ij} + \frac{(B_j \, R_k - B_i \, R_k)}{c}$$ 501

Mesure pour au moins cinq balises de DTDOA pour $R_1$ et $R_2$

$$DTDOA_k \, (Bi,Bj) = \frac{(B_j \, R_2 - B_i \, R_2)}{c} - \frac{(B_j \, R_1 - B_i \, R_1)}{c}$$ 502

Calcul de la position d'au moins le récepteur $R_1$ 503

Calcul de $dt_{ij}$ 504

# FIG.5

Europäisches
Patentamt

European
Patent Office

Office européen
des brevets

# RAPPORT DE RECHERCHE EUROPEENNE

Numéro de la demande

EP 18 20 1076

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LENG MEI ET AL: "Modified CRLB for Cooperative Geolocation of Two Devices Using Signals of Opportunity", IEEE TRANSACTIONS ON WIRELESS COMMUNICATIONS, IEEE SERVICE CENTER, PISCATAWAY, NJ, US, vol. 13, no. 7, 1 juillet 2014 (2014-07-01), pages 3636-3649, XP011553222, ISSN: 1536-1276, DOI: 10.1109/TWC.2014.2314096 [extrait le 2014-07-08] * le document en entier * ----- | 1-9 | INV. G01S5/10 ADD. H04W64/00 |
| X | FAN H H ET AL: "Asynchronous Differential TDOA for Sensor Self-Localization", 2007 IEEE INTERNATIONAL CONFERENCE ON ACOUSTICS, SPEECH, AND SIGNAL PROCESSING 15-20 APRIL 2007 HONOLULU, HI, USA, IEEE, PISCATAWAY, NJ, USA, 15 avril 2007 (2007-04-15), pages II-1109, XP031463378, ISBN: 978-1-4244-0727-9 * page 1109, alinéa 2 - page 1112, alinéa 6 * * abrégé * ----- -/-- | 1-9 | DOMAINES TECHNIQUES RECHERCHES (IPC) G01S H04W |

Le présent rapport a été établi pour toutes les revendications

| Lieu de la recherche | Date d'achèvement de la recherche | Examinateur |
|---|---|---|
| Munich | 6 mars 2019 | von Walter, Sven-Uwe |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 18 20 1076

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | LENG MEI ET AL: "Anchor-Aided Joint Localization and Synchronization Using SOOP: Theory and Experiments", IEEE TRANSACTIONS ON WIRELESS COMMUNICATIONS, IEEE SERVICE CENTER, PISCATAWAY, NJ, US, vol. 15, no. 11, 1 novembre 2016 (2016-11-01), pages 7670-7685, XP011633815, ISSN: 1536-1276, DOI: 10.1109/TWC.2016.2606099 [extrait le 2016-11-09] * page 7674, alinéa III * * abrégé * ----- | 1-9 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 6 mars 2019 | von Walter, Sven-Uwe |